# EUROPÄISCHE PATENTSCHRIFT

(11) **EP 1 229 484 B1**
(45) Veröffentlichungstag und Bekanntmachung des Hinweises auf die Patenterteilung: **30.07.2008**
(21) Anmeldenummer: 02001549.1
(22) Anmeldetag: 23.01.2002
(51) Int. Cl.: G06K 9/03, G06K 9/72

(54) **Verfahren und Vorrichtung zum Lesen von Sendungsadressen mit Postkodes**
Method and apparatus for reading parcel addresses with postcodes
Méthode et appareil pour lire des adresses d'envoi avec codes postaux

(30) Priorität: 02.02.2001 DE 10104655
(43) Veröffentlichungstag der Anmeldung: 07.08.2002
(73) Patentinhaber: SIEMENS AKTIENGESELLSCHAFT, 80333 München (DE)
(72) Erfinder: Rosenbaum, Walter, Dr., 75116 Paris (FR)
(74) Vertreter: Maier, Daniel Oliver

(56) Entgegenhaltungen:
- DE-A- 19 624 977
- DOWNTON A C ET AL: "SYNTACTIC AND CONTEXTUAL POST-PROCESSING OF HANDWRITTEN ADDRESSES FOR OPTICAL CHARACTER RECOGNITION" PROCEEDINGS OF THE INTERNATIONAL CONFERENCE ON PATTERN RECOGNITION. (ICPR). ROME, 14 - 17 NOV., 1988, WASHINGTON, IEEE COMP. SOC. PRESS, US, Bd. 2 CONF. 9, 14. November 1988 (1988-11-14), Seiten 1072-1076, XP000013062 ISBN: 0-8186-0878-1

## Beschreibung

Die Erfindung betrifft ein Verfahren und eine Vorrichtung gemäß den Oberbegriffen der unabhängigen Patentansprüche 1 und 7.

Systeme zum automatischen Lesen von Adressen (OCR) sind auf dem Gebiet der Briefbearbeitung wohlbekannt und z.B. in der DE 195 31 392 beschrieben. Mit modernen OCR-Briefsortieranlagen sind Bearbeitungsraten von 10 Briefen pro Sekunde, d.h. 36.000 Briefen pro Stunde und mehr erreichbar. Die Erkennungszuverlässigkeit variiert jedoch stark mit der Schriftart und Gesamtqualität der auf die Oberfläche der Briefe aufgebrachten Adressinformation. Im Falle einer erfolgreichen Erkennung kann der betreffende Brief mit einem maschinenlesbaren Barkode versehen werden. Dieser Barkode erlaubt eine weitere mechanische Bearbeitung bis zu einer beliebigen gewünschten Sortierordnung. Insbesondere ermöglicht die Verwendung von Barkodes eine Sortierung der Briefe bis zur Sortierebene des Postgangs, bei der Briefe entsprechend der Reihenfolge ihrer Verteilung durch den Zusteller sortiert werden.

Da die Erkennungsraten der automatischen Lesesysteme sehr variieren, ist es notwendig, diese durch verschiedene Formen von manueller Intervention zu unterstützen.

Hierbei wird die eingegebene Adresse kodiert und mittels eines Verzeichnisses in einen maschinenlesbaren Sortierbarkode umgewandelt, der auf die Sendung aufgebracht wird.

Dazu werden in Videokodiersystemen Videobilder der Sendungen Operateuren zum Kodieren vorgeführt. Dies kann online und offline erfolgen. Bei online Videokodiersystemen (OVS) wird das Videobild dem Operateur gezeigt, während die physikalische Sendung in Verzögerungsstrecken gehalten wird. In diesen Verzögerungsstrecken wird normalerweise die Sendung in Bewegung gehalten für eine Zeitdauer, die ausreicht, damit der OVS-Operateur die notwendige Sortierinformation für das betreffende Bild eingibt. Die üblichen Verzögerungsstrecken erlauben eine Verzögerung zwischen 10 und 30 Sekunden. Je länger die Verzögerungsstrecke, desto größer sind die Kosten sowie die Erfordernisse für Wartung und die physische Größe der Anlage.

Bei der Verwendung von OVS reicht die zur Verfügung stehende Zeit häufig nur für eine sorgfältige Eingabe des Postkodes (PK) aus.

Bei offline Kodiersystemen, wie in der US PS 49 92 649 beschrieben, werden Sendungen mit nicht erkannten Adressen mit einer zusätzlichen Information, einer tracking identification (TID) versehen. Die nicht erkannten Sendungen werden extern gespeichert, während die Bilder dieser Sendungen Operateuren zum Kodieren präsentiert werden wobei keine zeitlichen Einschränkungen vorliegen. Anschließend werden die Sendungen TID-Lesegeräten vorgeführt. Die TID wird mit der eingegebenen Adressinformation verknüpft. Darauf basierend kann auch eine übliche Barkode-Sortierinformation auf die Sendung aufgebracht werden, so dass die betreffende Sendung wie üblicherweise OCR-gelesene Sendungen bearbeitet werden können. Obwohl das offline-Video-Kodierverfahren eine effektive Methode zur Kodierung sämtlicher Adressbestandteile darstellt, werden zusätzlich Kapazitäten für die Weiterverarbeitung mit nichtgelesenen Adressen versehenen Sendungen und eine entsprechend komplexe Logistik verlangt.

Um die Lesezeiten weiter zu verkürzen, wurde in WO 97/49503 vorgeschlagen, dass das Abbild jeder innerhalb einer bestimmten Zeit mittels Videokodierung nicht eindeutig erkannten vollständigen Adressinformation mit den bei der Videokodierung erhaltenen Informationen über erkannte Adressteile der OCR-Einheit zu einer weiteren automatischen Auswertung zur Adressinterpretation zugeführt wird.

Diese Methode wird bei Adressen angewendet, bei denen nur der Bestimmungsort auch als lesbarer Postkode (z.B. Postleitzahl) auf der Sendungsoberfläche aufgebracht ist.

Es gibt aber auch Länder, in denen weitere Teile der Adresse im Postkode dargestellt sind, z.B. mehrere kleine Straßen, Straßen mittlerer Größe oder Teile größerer Straßen. Ist das Ergebnis des OCR-Leseprozesses nicht eindeutig, so wird das entsprechende Abbild mit der Adresse zum Videokodieren zu einem Videokodierplatz übertragen.

Der in den unabhängigen Ansprüchen 1 und 7 angegebenen Erfindung liegt die Aufgabe zugrunde, bei verwendeten Postkodes, die die Adressen bis zum Teil einer größeren Straße oder einigen kleinen Straßen kennzeichnen, ein Verfahren und eine Vorrichtung zu schaffen, die ein möglichst schnelles und eindeutiges Ermitteln der Adresse in einem interaktiven Leseprozess mit einer OCR-Einheit und mindestens einem Videokodierplatz gewährleisten.

Ist das Leseergebnis der OCR-Einheit nicht eindeutig, so wird als erstes der Postkode videokodiert. Dann wird mit diesem Postkode in einer entsprechenden Datenbank die Straße/n bzw. der Straßenbereich ermittelt und mit der von der OCR-Einheit gelesenen Straße verglichen. Bei Übereinstimmung wird der videokodierte Postkode akzeptiert, und bei Nichtübereinstimmung erfolgt durch einen oder zwei Operateure die Videokodierung eines Extraktionskodes (AKS-Kode) des Abbildes. Die AKS-Daten des ersten Operateurs werden dann mit den aus dem videokodierten Postkode abgeleiteten Straßen / Straßenbereiche in der OCR-Einheit verglichen. Passen sie zueinander, wird der Postkode akzeptiert, wenn nicht, werden die AKS-Daten von einem anderen Operateur videokodiert und mit den aus dem Postkode abgeleiteten Straßen / Straßenbereiche in der OCR-Einheit verglichen. Passen sie diesmal zusammen, erfolgt die Akzeptierung des Postkodes, wenn nicht, wird der Postkode von einem anderen Operateur als bei der ersten Postkodevideokodierung videokodiert. Beide Postkodes werden danach verglichen und bei einer Übereinstimmung wird der auf der Sendung befindliche Postkode als inkorrekt erkannt, bei Nichtübereinstimmung werden der oder die AKS-Kodes mit den aus dem zum zweiten Mal videokodierten Postkode abgeleiten Straßen / Straßenbereich in der OCR-Einheit verglichen. Passen die Kodes bei einem Vergleich zusammen, so wird der zum zweiten Mal videokodierte Postkode akzeptiert. Mit diesem Verfahren wird also schnell und sicher die Adresse bzw. der Postkode auch bei nicht durch die OCR-Einheit lesbarer Adresse ermittelt.

Vorteilhafte Ausgestaltungen der Erfindung sind in den abhängigen Ansprüchen dargelegt.

Um den richtigen Postkode bei einem als inkorrekt eingestuften auf der Sendung befindlichen Postkode zu ermitteln, ist es vorteilhaft, zusätzliche Leseprozesse in der OCR-Einheit mit dem um eine Stelle gekürzten, die Straßen/Straßenteil kennzeichnenden Teil des Postkodes und den verschiedenen AKS-Kodes durchzuführen. Ein inkorrekter Postkode kann sowohl ein falsch gewählter Postkode als auch ein in einigen Stellen undeutlich bzw. verwechselbar geschriebener Postkode sein. Sind die Leseergebnisse nicht eindeutig, so werden weitere Leseprozesse in der OCR-Einheit mit dem zusätzlich um eine weitere Stelle gekürzten, die Straßen/Straßenteil kennzeichnenden Teil des Postkodes und den verschiedenen AKS-Kodes durchgeführt. Dieses zusätzliche Stellenkürzen und Lesen in der OCR-Einheit wird solange weitergeführt, bis das Leseergebnis eindeutig ist oder nur noch wenige Kandidaten übrig sind, von denen der richtige mittels Selektionskodierung ausgewählt wird.

Vorteilhaft ist es, bei inkorrektem Postkode für die zusätzlichen Leseprozesse in der OCR-Einheit mit gekürztem Postkode unter Verwendung der AKS-Kodes die Kürzung mit der niederwertigsten Stelle zu beginnen. Wird kein eindeutiges Ergebnis erzielt, wird der Postkode zusätzlich um die nächste niederwertige Stelle gekürzt, usw.

Diese Reihenfolge bei der Kürzung wurde auf der Basis einer statistischen Fehlerhäufigkeit gewählt, wonach die häufigsten Fehler bei der niederwertigsten Stelle der Postkodes auftreten, die zweit häufigsten Fehler bei der zweitniederwertigsten Stelle, usw.

In einer weiteren vorteilhaften Ausgestaltung wird bei einem Postkode, der nur den Teil einer größeren Straße betrifft, im Verlaufe der Validierung des videokodierten Postkodes mit dem Leseergebnis der OCR-Einheit zusätzlich verglichen, ob sich die in der gelesenen / teilweise gelesenen Adresse angegebene Hausnummer innerhalb des aus dem Postkode ermittelten Hausnummernbereich befindet.

Vorteilhaft ist es auch, als Extraktionskode die ersten zwei Buchstaben des Straßennamens sowie die Hausnummer einzugeben.

Nachfolgend wird die Erfindung in einem Ausführungsbeispiel anhand der Zeichnung näher erläutert.
Dabei zeigen
- FIG 1: eine schematische Darstellung einer Vorrichtung zum Lesen von Sendungsadressen mit Postkodes,

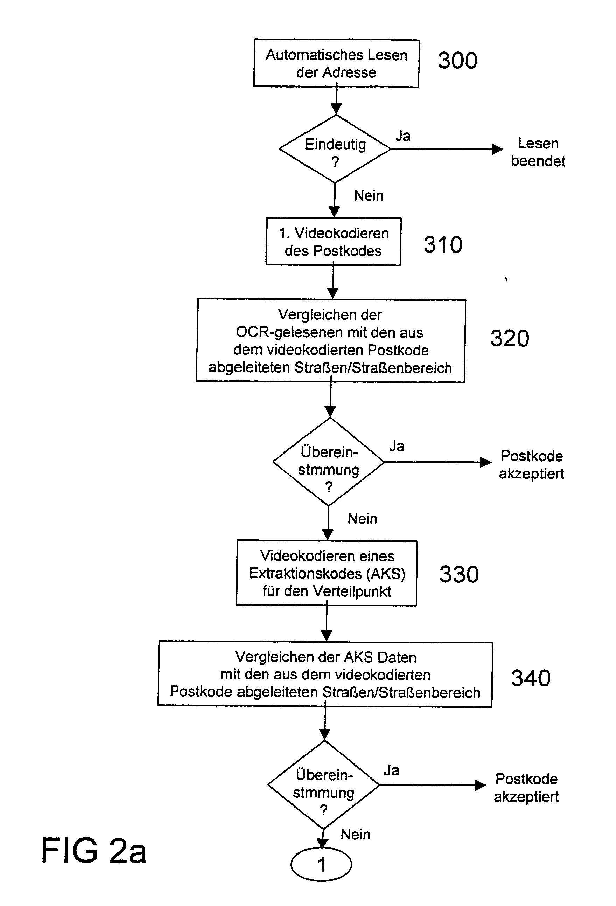

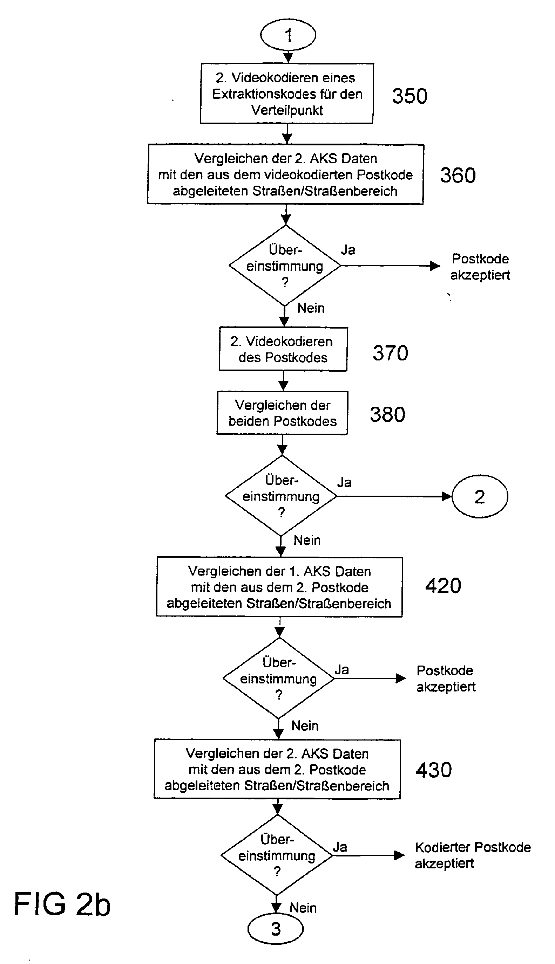

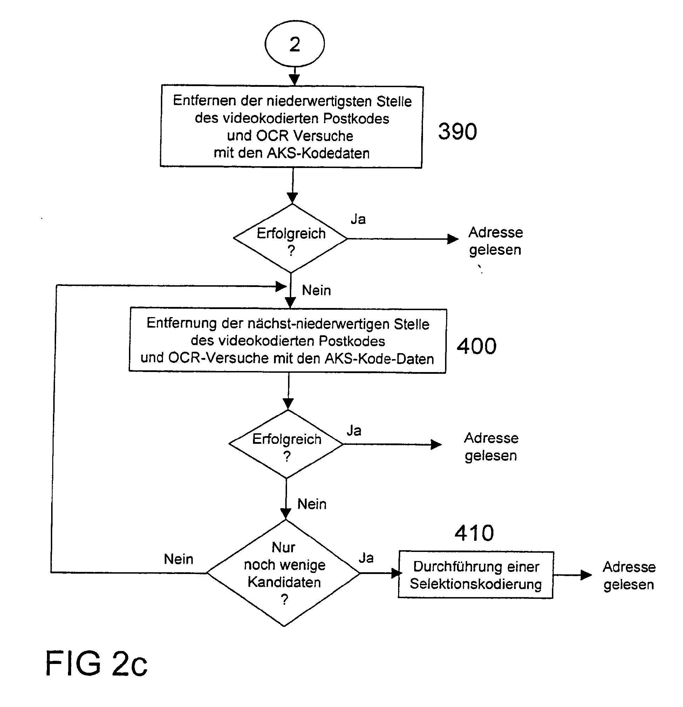

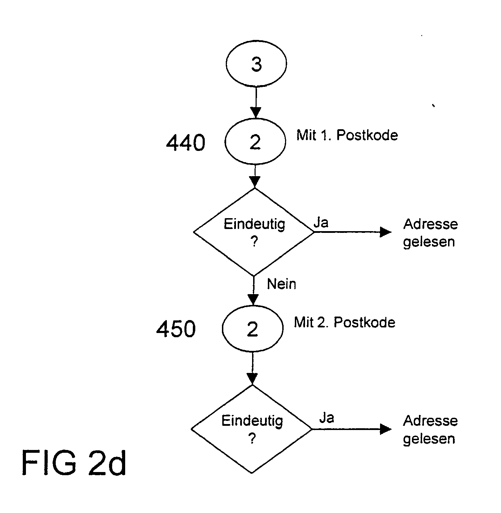

- FIG 2a-d: den verfahrensmäßigen Ablauf anhand eines Flussbildes,
- FIG 3a-d: eine schematische Darstellung des verfahrensmäßigen Ablaufes bei einem der als inkorrekt eingestuften Postkode.

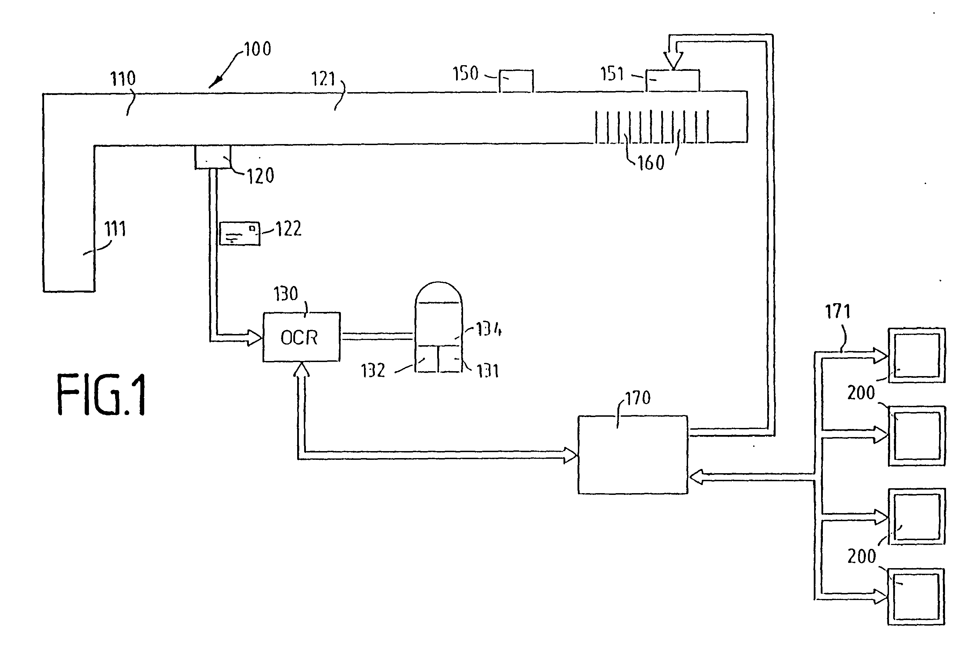

FIG 1 zeigt eine schematische Darstellung einer Briefverteilanlage mit der das erfindungsgemäße Verfahren ausgeführt werden kann. Der OCR-Briefsortierer 100 besteht aus einer Zuführeinrichtung 110, die sukzessive Sendungen aus einem Magazin abzieht und mit ca. 10 Sendungen pro Sekunde zu einem hochauflösenden Videoscanner 120 transportiert. Anschließend werden die Sendungen in einer Verzögerungsstrecke 121 transportiert. Die Sendungen weisen üblicherweise auf ihrer Oberfläche Adressinformationen auf. In einer OCR-Einheit 130 erfolgt eine Auswertung der Adressinformationen der Abbilder der Sendungen, die vom Videoscanner 120 gewonnen wurden. Im Fall einer vollständigen Auswertung wird ein Barkodedrucker 150 angesteuert und die Sendung wird mit einem entsprechenden Barkode für die anschließende Sortierung in Sortierfächer 160 versehen. Die OCR-Einheit 130 besteht aus einem oder mehreren Mikroprozessoren 131 mit assoziiertem Speicher 132, um Abbilder der Sendungen zu speichern. Weiterhin beinhaltet die OCR-Einheit eine Adressdatenbank 134 mit Postkodes, Städtenamen und Straßennamen und evtl. weiterer adressbezogener Information. Bei der Auswertung der Adressinformation aufweisenden Abbilder erfolgt eine merkmalsgesteuerte Reduktion der aus der Adressdatenbank 134 gewonnenen Eintragung, so dass eine Art Teilwörterbuch erzeugt wird. In einzelnen Eintragungen werden dabei Glaubwürdigkeiten zugeordnet, so dass bei der Auswertung eine Anzahl von Daten von richtig erkannten Adressen erzeugt werden. Die Vorrichtung enthält weiterhin einen Imagecontroller 170 sowie eine Anzahl Video-Kodierplätze 200, die mit dem Imagecontroller 170 direkt oder durch ein lokales Netzwerk (LAN) 171 verbunden sind. Falls die OCR-Auswertung eines Abbildes nicht eindeutig, d.h. erfolgreich war, wird dieses Bild von der OCR-Einheit 130 zum Imagecontroller 170 transferiert, der einerseits den TID Barkodedrucker 151 steuert und andererseits das entsprechende Bild zu einem der Videokodierplätze 200 überträgt. Der TID Barkodedrucker 151 bringt auf die entsprechende Sendung einen Identifikationskode TID auf, der es zu einem späteren Zeitpunkt ermöglicht, die ausgewertete Adressinformation mit der physikalischen Sendung zu knüpfen. Die Auswertung der Abbilder erfolgt in diesem Fall vorzugsweise offline, obwohl grundsätzlich bei einer genügend langen Verzögerungszeit auch eine on-line-Auswertung durch Videokodierung möglich ist. Im letzteren Fall kann der TID auch zu einem späteren Zeitpunkt, d.h. wenn die Videokodierung innerhalb einer bestimmten vorgegebenen Zeit nicht zu einer vollständigen Auswertung geführt hat, auf die Sendungen aufgebracht werden.

Zur Ausführung des im weiteren genauer dargestellten Verfahrens ist der Imagecontroller 170 derart ausgebildet, dass von der Videokodierung nicht vollständig ausgewertete Adressinformationen unter Verwendung der Ergebnisse der Videokodierung in der OCR-Einheit 130 einer weiteren automatischen Adressauswertung zugeführt werden.

Das aufgenommene und gespeicherte Abbild der jeweiligen Sendung mit der Adresse, enthaltend einen Postkode, der den Bestimmungsort und die Straße, den Teil einer Straße bei großen Straßen oder mehrere kleine Straßen kennzeichnet, wird zu einem ersten automatischen Leseversuch 300 der OCR-Einheit 130 zugeführt. Dieser Postkode ist in diesem Beispiel ein 6-stelliger Kode in kanonischer Form mit folgender Zeichenfolge ANA NAN, wobei A ein Buchstabe (alphabetisches Zeichen) und N eine Zahl (numerisches Zeichen) ist.

Die konkrete Ausführung des Postkodes ist natürlich nicht auf dieses Beispiel beschränkt.

Kann die Adresse in der OCR-Einheit 130 im ersten Leseversuch 300 eindeutig gelesen werden, ist die Erkennungsaufgabe gelöst. Wenn nicht, wird der Postkode videokodiert 310. Anschließend wird die von der OCR-Einheit 130 gelesene Straße mit der aus dem Postkode abgeleiteten Straße/n bzw. Straßenbereich verglichen 320. Dies erfolgt vorteilhaft auch in der OCR-Einheit 130. Passen die Angaben zueinander, so wird der videokodierte Postkode akzeptiert. Wenn nicht wird aus dem Abbild mit der Adresse an einem Videokodierplatz 200 ein Extraktionskode (AKS-Kode) erzeugt 330, bestehend aus den ersten zwei Buchstaben des Straßennamens und der Hausnummer. Diese AKS-Daten werden dann mit den aus dem videokodierten Postkode mit Hilfe der Adressdatenbank abgeleiteten Straßen / Straßenbereich verglichen 340. Passen sie zusammen, d.h. stimmen die bei der AKS-Kodierung eingegebenen ersten beiden Buchstaben mit den ersten beiden Buchstaben der aus dem Postkode ermittelten Straße bzw. mit einer der aus dem Postkode ermittelten Straßen überein und liegt ggf. die Hausnummer in dem Nummernbereich der aus dem Postkode ermittelten Straße, wird der Postkode akzeptiert. Wenn nicht, wird an einem anderen Videokodierplatz 200 eine weitere AKS-Kodierung der gleichen Adresse durchgeführt 350 und diese AKS-Daten werden ebenfalls mit den aus dem Postkode abgeleiteten Straßen / Straßenbereich verglichen 360. Bei Übereinstimmung wird der Postkode akzeptiert, bei keiner Übereinstimmung wird der Postkode ein zweites Mal durch einen anderen Operateur als bei der ersten Videokodierung des Postkodes an einem Videokodierplatz kodiert 370. Als nächstes werden beide Postkodes verglichen 380. Stimmen sie überein, so liegt kein Kodierfehler vor, so dass der auf der Sendung befindliche Postkode inkorrekt geschrieben (nicht lesbare oder verwechselbare Zeichen) sein muss. In diesem Fall wird von dem Postkode die niederwertigste Stelle entfernt und zusammen mit den AKS-Daten der ersten AKS-Videokodierung der OCR-Einheit 130 zu einem weiteren Leseversuch zugeführt. Ist der Versuch nicht erfolgreich wird noch ein Leseversuch mit dem reduzierten Postkode und den AKS-Daten der zweiten AKS-Videokodierung durchgeführt 390. Ergibt auch dieser Leseversuch kein eindeutiges Ergebnis, so wird zusätzlich die nächste niederwertige Stelle vom Postkode entfernt und mit den AKS-Daten werden wie beschrieben weitere Leseversuche in der OCR-Einheit 130 durchgeführt 400. Diese Prozedur (Reduzierung des die Straßen / Straßenbereich kennzeichnenden Teils des Postkodes um eine weitere Stelle und neue Leseversuche) wird solange durchgeführt, bis die Adresse eindeutig gelesen wird oder bis nur noch wenige Kandidaten übrig sind, aus denen dann einfach und schnell die richtige Adresse mittels Selektionskodierung ausgewählt wird 410, z.B. durch anklicken des richtigen Straßennamens.

War beim Vergleich der beiden Postkodes 380 keine Übereinstimmung zu verzeichnen, so werden die ersten AKS-Daten mit den aus dem nachträglich videokodierten Postkode (2. Postkode) abgeleiteten Straßen / Straßenbereich verglichen 420. Passen sie zusammen, wird der 2. Postkode akzeptiert, wenn nicht, erfolgt der Vergleich der zweiten AKS-Daten mit dem aus dem zweiten Postkode abgeleiteten Straßen / Straßenbereich 430. Passen die Daten zusammen, wird der videokodierte 2. Postkode akzeptiert. Ist keine Übereinstimmung vorhanden, so wird der oben beschriebene Prozess der Durchführung weiterer Leseversuche in der OCR-Einheit 130 mit den AKS-Kodes und den gekürzten Postkodes durchgeführt. Begonnen wird dabei mit dem ersten Postkode 440, und wenn die Adresse nicht eindeutig erkannt wird, mit dem zweiten, nachträglich videokodierten Postkode der betreffenden Sendung 450.

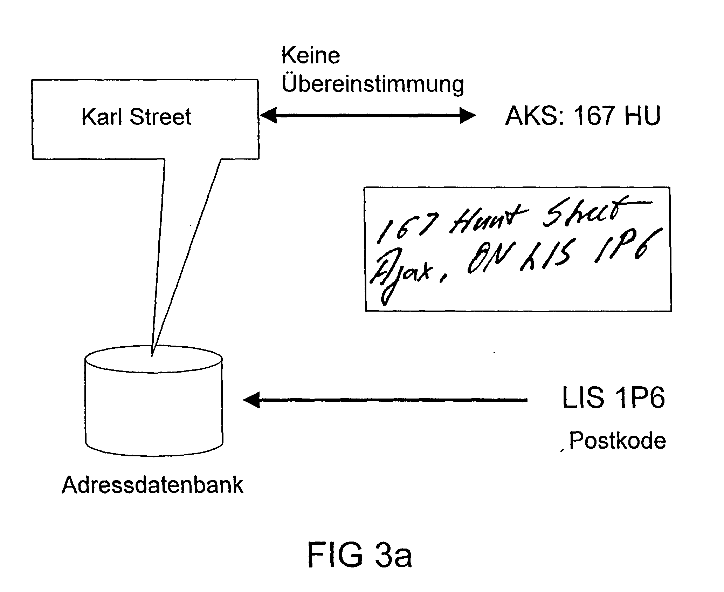

In den FIG 3a-d wird das Verfahren noch zusätzlich kurz erläutert.

Gemäß FIG 3a befinden sich auf der Sendung folgende Adressangaben:
167 Hunt Street
Ajax, ON LIS 1P6 (Postkode)

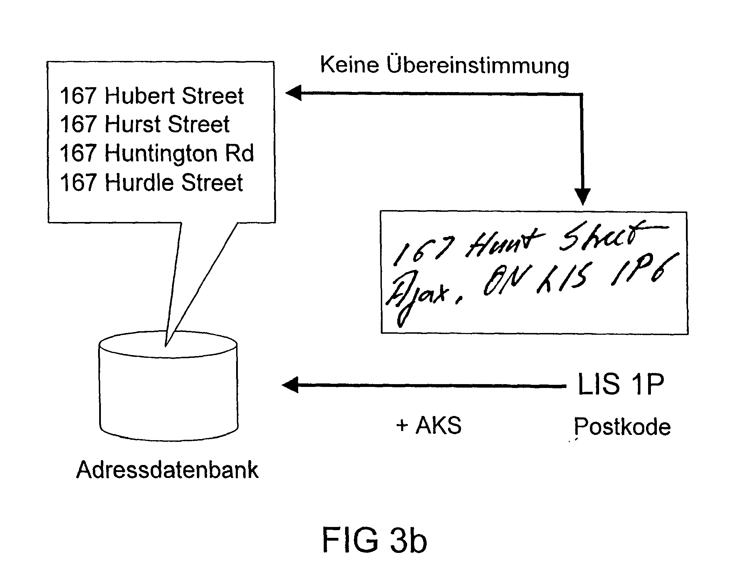

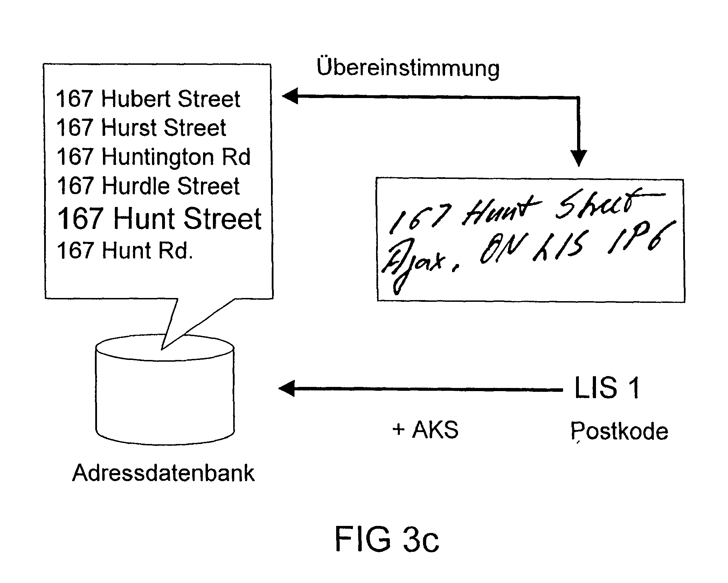

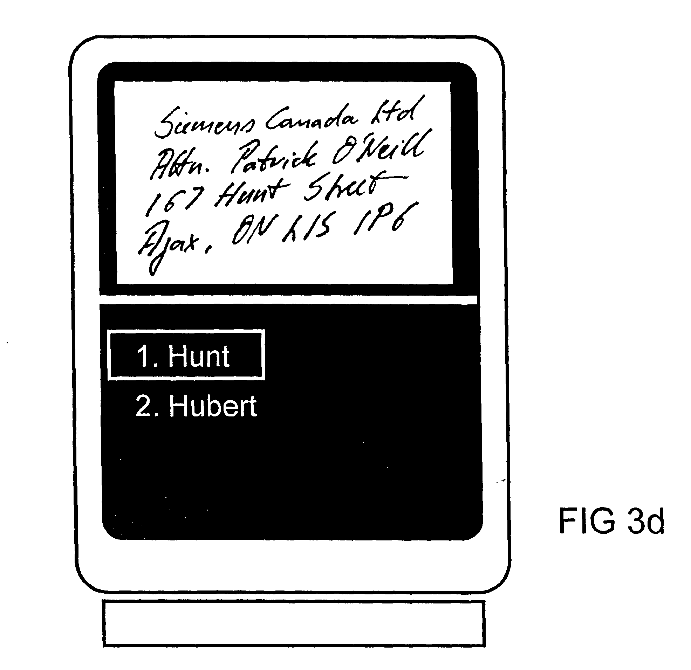

Mit dem Postkode LIS 1B6 wurde in der Adress-Datenbank 134 als Eintrag die Karl Street gefunden. Bei der AKS-Kodierung der auf der Sendung befindlichen Adresse wurde vom Operateur eingegeben: 167 HU. Wie erkennbar, passen diese Angaben nicht mit der Karl Street zusammen. Da in vorhergehenden Schritten schon ermittelt wurde, dass der Postkode inkorrekt ist, wird gemäß FIG 3b die letzte Stelle des Postkodes entfernt und in der Adress-Datenbank 134 mit dem Postkode LIS 1P und dem AKS-Kode 167 HU nach entsprechenden Einträgen gesucht. Dabei wurden die vier angegebenen Einträge gefunden, die aber mit der Hunt Street nicht übereinstimmen. Deshalb wurde eine weitere Stelle aus dem Postkode entfernt. Mit dem verkürzten Postkode LIS 1 und den AKS-Daten wurden in dem nun größerem Suchraum in der Adress-Datenbank 134 die in FIG 3c angegebenen Einträge gefunden. Da beim kompletten Leseprozess keine eindeutige Zuordnung erfolgte, sondern die beiden Varianten Hunt Street und Hubert Street als wahrscheinlichste Lösungen ermittelt wurden, erfolgte in einem letzten Schritt eine Selektionskodierung, bei der wie in FIG 3d dargestellt dem Operateur die komplette Adressaufschrift und die beiden zu selektierenden Varianten auf dem Bildschirm dargestellt werden. Durch Betätigung der Taste für die Ziffer 1 wählt er dann sehr schnell die richtige Straße (Hunt Street) aus.

## Patentansprüche

1. Verfahren zum Lesen von Sendungsadressen mit Postkodes, die die Adressen bis zum Teil einer größeren Straße oder einigen kleinen Straßen kennzeichnen, bei dem die Abbilder der die Adressen aufweisenden Sendungsoberflächen aufgenommen, gespeichert und einer OCR-Einheit (130) zum Lesen von Adressen (300) und Generieren entsprechender Adresskodes zugeführt werden und bei dem im Falle eines nichteindeutigen Leseergebnisses der OCR-Einheit (130) das betreffende Abbild mit der Adresse mindestens einem Videokodierplatz (200) zum Videokodieren des Postkodes (310) zugeführt wird, wobei im Falle der Nichtübereinstimmung der von der OCR-Einheit (130) gelesenen Stra-βe mit der aus dem videokodierten Postkode abgeleiteten Straße/n oder Straßenbereich folgende Schritte durchgeführt werden:
- übermitteln des betreffenden Abbildes an einen oder zwei Videokodierplätze zum Eingeben jeweils eines den Verteilpunkt kennzeichnenden Extraktionskodes (330,350)
- vergleichen des Extraktionskodes (AKS-Kodes) mit der aus dem Postkode abgeleiteten Straße/n bzw. Straßenbereich (340,360) in der OCR-Einheit (130), akzeptieren des Postkodes, wenn bei einem Kodevergleich diese zueinander passen, wobei die zweite AKS-Kodierung (350) erst erfolgt, wenn mittels der ersten AKS-Kodierung (330) kein akzeptierter Postkode ermittelt wird,
- übermitteln des betreffenden Abbildes an einen Videokodierplatz zum nochmaligen Videokodieren (370) des Postkodes durch einen anderen Operateur als bei der ersten Postkodevideokodierung (310), wenn beim Vergleich des/der AKS-Kodes mit dem zuerst videokodierten Postkode diese nicht zueinander passen,
- vergleichen der beiden videokodierten Postkodes (380), bei deren Übereinstimmung der auf der Sendung befindliche Postkode als inkorrekt eingestuft wird und bei deren Nichtübereinstimmung:
- vergleichen des/der AKS-Kodes mit der aus dem zum zweiten Mal videokodierten Postkode abgeleiteten Straße/n bzw. Straßenbereich (420,430) in der OCR-Einheit, bis bei einem Kodevergleich die Kodes zueinander passen und damit akzeptieren des zum zweiten Mal videokodierten Postkodes, und wenn die Kodes nicht zueinander passen, erfolgt die Einstufung des auf der Sendung befindlichen Postkodes als inkorrekter Postkode.

2. Verfahren nach Anspruch 1, mit folgenden Schritten bei als inkorrekt eingestuften Postkodes:
- durchführen zusätzlicher Leseprozesse in der OCR-Einheit (130) mit dem um eine Stelle gekürzten, die Stra-ßen/Straßenteil kennzeichnenden Teil des Postkodes und mit den AKS-Kodes (390) und bei nicht eindeutigen Leseergebnissen:
- durchführen weiterer Leseprozesse in der OCR-Einheit (130) mit dem zusätzlich um eine weitere Stelle gekürzten, die Straßen/Straßenteil kennzeichnenden Teil des Postkodes und den AKS-Kodes (400), wobei das zusätzliche Stellenkürzen und die Leseprozesse so lange durchgeführt werden, bis das Leseergebnis eindeutig ist oder nur noch wenige Kandidaten übrig sind, von denen der richtige mittels Selektionskodierung ausgewählt wird.

3. Verfahren nach Anspruch 1 und 2, wobei im Falle der Nichtübereinstimmung der von der OCR-Einheit (130) gelesenen Straße mit der aus dem videokodierten Postkode abgeleiteten Straße/n oder Straßenbereich folgende Schritte durchgeführt werden:
- übermitteln des betreffenden Abbildes an einen Videokodierplatz zum Eingeben eines den Verteilpunkt kennzeichnenden Extraktionskodes (330),
- Vergleichen in der OCR-Einheit (130), ob die aus dem videokodierten ersten Postkode abgeleitete Straße/n oder Straßenbereiche mit den Extraktionskodedaten übereinstimmt (340), wobei bei Übereinstimmung der videokodierte Postkode akzeptiert wird, im Falle der Nichtübereinstimmung:
- übermitteln des betreffenden Abbildes an einen Videokodierplatz zum nochmaligen Eingeben eines den Verteilpunkt kennzeichnenden Extraktionskodes durch einen anderen Operateur (350),
- vergleichen in der OCR-Einheit (130), ob die aus dem videokodierten ersten Postkode abgeleitete Straße/n oder Straßenbereich mit den Extraktionskodedaten übereinstimmt (360), wobei bei Übereinstimmung der videokodierte erste Postkode akzeptiert wird und im Falle der Nichtübereinstimmung:
- übermitteln des betreffenden Abbildes an einen Videokodierplatz zum nochmaligen Videokodieren des Postkodes (370) durch einen anderen Operateur als bei der ersten Postkodevideokodierung (310) und vergleichen der beiden Kodierergebnisse der videokodierten Postkodes, bei deren Übereinstimmung folgende Schritte erfolgen:
- durchführen zusätzlicher Leseprozesse in der OCR-Einheit (130) mit dem um eine Stelle gekürzten, die Straßen/Straßenteil kennzeichnenden Teil des videokodierten Postkodes und den Extraktionskodes (390) und bei nicht eindeutigen Leseergebnissen durchführen weiterer Leseprozesse in der OCR-Einheit mit dem zusätzlich um eine weitere Stelle gekürzten, die Straßen/Straßenteil kennzeichnenden Teil des Postkodes und den Extraktionskodes (400), wobei diese Prozesse so lange weitergeführt werden, bis das Leseergebnis eindeutig ist oder nur noch wenige Kandidaten übrig sind, von denen der richtige mittels Selektionskodierung ausgewählt wird, und wobei bei Nichtübereinstimmung der beiden videokodierten Postkodes folgende Schritte durchgeführt werden:
- vergleichen in der OCR-Einheit, ob die aus dem zuerst videokodierten Postkode abgeleitete Straße/n oder Straßenbereich mit den ersten Extraktionskodedaten übereinstimmt (420), wobei bei Übereinstimmung der videokodierte Postkode akzeptiert wird, und im Falle der Nichtübereinstimmung:
- vergleichen in der OCR-Einheit, ob die aus dem nachträglich videokodierten Postkode abgeleitete Straße/n oder Straßenbereich mit dem zweiten Extraktionskodedaten übereinstimmt (430), wobei bei Übereinstimmung der videokodierte zweite Postkode akzeptiert wird und im Falle der Nichtübereinstimmung:
- durchführen zusätzlicher Leseprozesse in der OCR-Einheit (130) mit dem um eine Stelle gekürzten, zuerst videokodierten, die Straße/n oder Straßenteil kennzeichnenden Teil des Postkodes und mit den Extraktionskodes, und bei nicht eindeutigen Leseergebnissen durchführen weiterer Leseprozesse mit dem zusätzlich um eine weitere Stelle gekürzten, zuerst videokodierten, die Straße/n oder Straßenteil kennzeichnenden Teil des Postkodes und den Extraktionskodes solange, bis das Leseergebnis eindeutig ist oder nur noch wenige Kandidaten übrig sind, von denen der richtige mittels Selektionskodierung ausgewählt wird und falls die Adresse nicht eindeutig ermittelbar ist:
- durchführen dieser zusätzlichen Leseprozesse in der OCR-Einheit (130) mit dem zweiten, nachträglich videokodierten Postkode und den Extraktionskodes bis zur eindeutigen Adressermittlung (450).

4. Verfahren nach Anspruch 2 und 3, bei dem der jeweilige videokodierte, die Straßen / Straßenteil kennzeichnende Teil des Postkodes zuerst um die niederwertigste Stelle gekürzt wird, wenn dann beim nochmaligen Lesen in der OCR-Einheit (130) kein eindeutiges Ergebnis erzielt wird, zusätzlich um die nächst niederwertige Stelle gekürzt wird usw.

5. Verfahren nach Anspruch 1, bei dem der Postkode nur den Teil einer großen Straße betrifft, wobei bei der Validierung des videokodierten Postkodes mit dem Leseergebnis der OCR-Einheit (130) zusätzlich verglichen wird, ob sich die in der gelesenen/teilweise gelesenen Adresse angegebene Hausnummer innerhalb des aus dem Postkode ermittelten Hausnummerbereiches befindet.

6. Verfahren nach einem der Ansprüche 1 bis 3, bei dem als AKS-Kode die ersten zwei Buchstaben des Straßennamens und die Hausnummer eingegeben werden.

7. Vorrichtung zum Lesen von Sendungsadressen mit Postkodes, die die Adressen bis zum Teil einer größeren Straße oder einigen kleinen Straßen kennzeichnen, mit einem automatischen Adresslesesystem, das folgende Elemente aufweist:
- eine Vorrichtung zur Gewinnung von Abbildern von Sendungen (120),
- eine OCR-Einheit (130) zur automatischen Auswertung der die Adressinformationen aufweisenden Abbilder der Sendungsoberflächen,
- Videokodierplätze (200) zur Videokodierung der die Adressinformationen enthaltenen Abbilder der Sendungsoberflächen,
- einen Controller (170) zur Steuerung des Ablaufes in der OCR-Einheit (130), den Videokodierplätzen, sowie des Datenaustausches, der derart ausgebildet ist, dass
- nachdem in der OCR-Einheit (130) Adressen in einem ersten Leseversuch (310) nicht eindeutig gelesen werden konnten, als erstes die entsprechenden Abbilder der Sendungsoberflächen mit diesen Adressen an die Videokodierplätze (200) zum Videokodieren der Postkodes übertragen werden, wobei im Falle der Nichtübereinstimmung der von der OCR-Einheit (130) gelesenen Straße mit der aus dem videokodierten Postkode abgeleiteten Straße/n oder Straßenbereich folgende Schritte durchgeführt werden:
- übermitteln des betreffenden Abbildes an einen oder zwei Videokodierplätze zum Eingeben jeweils eines den Verteilpunkt kennzeichnenden Extraktionskodes (330,350)
- vergleichen des Extraktionskodes (AKS-Kode) mit der aus dem Postkode abgeleiteten Straße/n bzw. Straßenbereich (340,360) in der OCR-Einheit (130), akzeptieren des Postkodes, wenn bei einem Kodevergleich diese zueinander passen, wobei die zweite AKS-Kodierung (350) erst erfolgt, wenn mittels der ersten AKS-Kodierung (330) kein akzeptierter Postkode ermittelt wird,
- übermitteln des betreffenden Abbildes an einen Videokodierplatz zum nochmaligen Videokodieren (370) des Postkodes durch einen anderen Operateur als bei der ersten Postkodevideokodierung (310), wenn beim Vergleich des/der AKS-Kodes mit dem zuerst videokodierten Postkode diese nicht zueinander passen,
- vergleichen der beiden videokodierten Postkodes (380), bei deren Übereinstimmung der auf der Sendung befindliche Postkode als inkorrekt eingestuft wird und bei deren Nichtübereinstimmung:
- vergleichen des/der AKS-Kodes mit der aus dem zum zweiten Mal videokodierten Postkode abgeleiteten Straße/n bzw. Straßenbereich (420,430) in der OCR-Einheit, bis bei einem Kodevergleich die Kodes zueinander passen und damit akzeptieren des zum zweiten Mal videokodierten Postkodes, und wenn die Kodes nicht zueinander passen, erfolgt die Einstufung des auf der Sendung befindlichen Postkodes als inkorrekter Postkode.

8. Vorrichtung nach Anspruch 7, wobei der Controller (170) so ausgebildet ist, dass folgende Schritte bei als inkorrekt erkannten Postkodes zusätzlich ausgeführt werden:
- durchführen zusätzlicher Leseprozesse in der OCR-Einheit (130) mit dem um eine Stelle gekürzten, die Straßen / Straßenteil kennzeichnenden Teil des Postkodes und jeweils mit den AKS-Kodes und bei nicht eindeutigen Leseergebnissen:
- durchführen weiterer Leseprozesse in der OCR-Einheit (130) mit dem zusätzlich um eine weitere Stelle gekürzten, die Straßen / Straßenteil kennzeichnenden Teil des Postkodes und den AKS-Kodes, wobei das Stellenkürzen und die Leseprozesse so lange weitergeführt werden, bis das Leseergebnis eindeutig ist oder nur noch wenige Kandidaten übrig sind, von denen der richtige mittels Selektionskodierung ausgewählt wird.

## Claims

1. A method for reading dispatch addresses with postcodes which identify the addresses up to part of a larger street or a few small streets, in which the images of the dispatch surfaces having the addresses are recorded, stored and fed to an OCR unit (130) for the reading of addresses (300) and generation of corresponding address codes, and in which, in the case of a non-unambiguous read result of the OCR unit (130), the relevant image with the address is fed to at least one video coding station (200) for the video coding of the postcode (310), the following steps being carried out if the street read by the OCR unit (130) does not correspond to the street(s) or street region derived from the video-coded postcode:
- communication of the relevant image to one or two video coding stations for the inputting of a respective extraction code (330, 350) which identifies the distribution point,
- comparison of the extraction code (AKS code) with the street(s) or street region (340, 360) derived from the postcode in the OCR unit (130), acceptance of the postcode if these match one another in the case of a code comparison, the second AKS coding (350) being effected only if no accepted postcode is determined by means of the first AKS coding (330),
- communication of the relevant image to a video coding station for the repeated video coding (370) of the postcode by a different operator than in the case of the first postcode video coding (310) if, in the case of the comparison of the AKS code(s) with the postcode video-coded first, these do not match one another,
- comparison of the two video-coded postcodes (380), and if they correspond the postcode situated on the dispatch is classified as incorrect, and if they do not correspond:
- comparison of the AKS code(s) with the street(s) or street region (420, 430) derived from the postcode video-coded for the second time in the OCR unit until the codes match one another in the case of a code comparison and thus acceptance of the postcode video-coded for the second time, and if the codes do not match one another, the postcode situated on the dispatch is classified as an incorrect postcode.

2. The method as claimed in claim 1, having the following steps in the case of postcodes classified as incorrect:
- performance of additional reading processes in the OCR unit (130) with that part of the postcode which identifies the streets/street part and is shortened by one position and with the AKS codes (390) and, in the case of non-unambiguous read results:
- performance of further reading processes in the OCR unit (130) with that part of the postcode which identifies the streets/street part and is additionally shortened by a further position and with the AKS codes (400), the additional position-shortening and the reading processes being performed until the read result is unambiguous or only a few candidates remain, the correct one of which is selected by means of selection coding.

3. The method as claimed in claims 1 and 2, the following steps being carried out if the street read by the OCR unit (130) does not correspond to the street(s) or street region derived from the video-coded postcode:
- communication of the relevant image to a video coding station for the inputting of an extraction code (330) which identifies the distribution point,
- comparison in the OCR unit (130) of whether the street(s) or street regions derived from the video-coded first postcode corresponds (340) to the extraction code data, the video-coded postcode being accepted in the case of correspondence and, in the case of non-correspondence:
- communication of the relevant image to a video coding station for the repeated inputting of an extraction code which identifies the distribution point by another operator (350),
- comparison in the OCR unit (130) of whether the street(s) or street region derived from the video-coded first postcode corresponds (360) to the extraction code data, the video-coded first postcode being accepted in the case of correspondence and, in the case of non-correspondence:
- communication of the relevant image to a video coding station for the repeated video coding of the postcode (370) by a different operator than in the case of the first postcode video coding (310) and comparison of the two coding results of the video-coded postcodes, and, if they correspond, the following steps are effected:
- performance of additional reading processes in the OCR unit with that part of the video-coded postcode which identifies the streets/street part and is shortened by one position and with the extraction codes (390) and, in the case of non-unambiguous read results, performance of further reading processes in the OCR unit with that part of the postcode which identifies the streets/street part and is additionally shortened by a further position and with the extraction codes (400), these processes being continued until the read result is unambiguous or only a few candidates remain, the correct one of which is selected by means of selection coding, and, if the two video-coded postcodes do not correspond, the following steps being performed:
- comparison in the OCR unit of whether the street(s) or street region derived from the postcode video-coded first corresponds (420) to the first extraction code data, the video-coded postcode being accepted in the case of correspondence and, in the case of non-correspondence:
- comparison in the OCR unit of whether the street(s) or street region derived from the subsequently video-coded postcode corresponds (430) to the second extraction code data, the video-coded second postcode being accepted in the case of correspondence and, in the case of non-correspondence:
- performance of additional reading processes in the OCR unit (130) with that part of the postcode which identifies the street(s) or street part, was video-coded first and is shortened by one position and with the extraction codes and, in the case of non-unambiguous read results, performance of further reading processes with that part of the postcode which identifies the street(s) or street part, was video-coded first and is additionally shortened by a further position and with the extraction codes until the read result is unambiguous or only a few candidates remain, the correct one of which is selected by means of selection coding, and if the address cannot be determined unambiguously:
- performance of these additional reading processes in the OCR unit (130) with the second, subsequently video-coded postcode and the extraction codes until unambiguous address determination (450).

4. The method as claimed in claims 2 and 3, in which the respective video-coded part of the postcode which identifies the streets/street part is first shortened by the least significant position and if no unambiguous result is then obtained upon repeated reading in the OCR unit (130), it is additionally shortened by the next less-significant position, etc.

5. The method as claimed in claim 1, in which the postcode relates only to the part of a large street, in which case, during the validation of the video-coded postcode with the read result of the OCR unit (130), comparison is additionally effected as to whether the house number specified in the read/partly read address is situated within the house number range determined from the postcode.

6. The method as claimed in one of claims 1 to 3, in which the first two letters of the street name and the house number are input as the AKS code.

7. An apparatus for reading dispatch addresses with postcodes which identify the addresses up to part of a larger street or a few small streets, having an automatic address reading system which has the following elements:
- an apparatus for obtaining images of dispatches (120),
- an OCR unit (130) for the automatic evaluation of the images of the dispatch surfaces, said images having the address information,
- video coding stations (200) for the video coding of the images of the dispatch surfaces, said images containing the address information,
- a controller (170) for controlling the sequence in the OCR unit (130), the video coding stations, and also the data exchange, which is designed in such a way that
- after addresses have not been able to be read unambiguously in a first reading attempt (310) in the OCR unit (130), firstly the corresponding images of the dispatch surfaces with these addresses are transmitted to the video coding stations (200) for the video coding of the postcodes, the following steps being carried out if the street read by the OCR unit (130) does not correspond to the street(s) or street region derived from the video-coded postcode:
- communication of the relevant image to one or two video coding stations for the inputting of a respective extraction code (330, 350) which identifies the distribution point,
- comparison of the extraction code(AKS code) with the street(s) or street region (340, 360) derived from the postcode in the OCR unit (130), acceptance of the postcode if these match one another in the case of a code comparison, the second AKS coding (350) being effected only if no accepted postcode is determined by means of the first AKS coding (330),
- communication of the relevant image to a video coding station for the repeated video coding (370) of the postcode by a different operator than in the case of the first postcode video coding (310) if, in the case of the comparison of the AKS code(s) with the postcode video-coded first, these do not match one another,
- comparison of the two video-coded postcodes (380), and if they correspond the postcode situated on the dispatch is classified as incorrect, and if they do not correspond:
- comparison of the AKS code(s) with the street(s) or street region (420, 430) derived from the postcode video-coded for the second time in the OCR unit until the codes match one another in the case of a code comparison and thus acceptance of the postcode video-coded for the second time, and if the codes do not match one another, the postcode situated on the dispatch is classified as an incorrect postcode.

8. The apparatus as claimed in claim 7, the controller (170) being designed in such a way that the following steps are additionally carried out in the case of postcodes which are recognized as incorrect:
- performance of additional reading processes in the OCR unit (130) with that part of the postcode which identifies the streets/street part and is shortened by one position and with the AKS codes and, in the case of non-unambiguous read results:
- performance of further reading processes in the OCR unit (130) with that part of the postcode which identifies the streets/street part and is additionally shortened by a further position and with the AKS codes, the position-shortening and the reading processes being performed until the read result is unambiguous or only a few candidates remain, the correct one of which is selected by means of selection coding.

## Revendications

1. Procédé de lecture d'adresses d'envois, lettres ou paquets, avec codes postaux, qui caractérisent les adresses jusqu'à la partie d'une grande rue ou quelques petites rues, dans lequel les images des surfaces d'envois comportant les adresses sont photographiées, mémorisées et envoyées à une unité OCR (130) pour la lecture d'adresses (300) et pour la génération de codes d'adresses correspondants et dans lequel, dans le cas d'un résultat de lecture équivoque de l'unité OCR (130), l'image concernée avec l'adresse est envoyée au moins à un poste de codage vidéo (200) pour le codage vidéo du code postal (310), sachant que, dans le cas d'une inégalité entre la rue lue par l'unité OCR (130) et la ou les rues ou la portion de rue déduite du code postal obtenu par codage vidéo, les étapes suivantes sont exécutées :
- transmission de l'image concernée à un ou deux postes de codage vidéo pour entrer à chaque fois un code d'extraction (330, 350) caractérisant le point de distribution,
- comparaison du code d'extraction / AKS avec la rue ou les rues ou la portion de rue déduite du code postal (340, 360) dans l'unité OCR (130), acceptation du code postal si les codes coïncident lors d'une comparaison de codes, le deuxième codage AKS (350) s'effectuant seulement si aucun code postal accepté n'a été déterminé au moyen du premier codage AKS (330),
- transmission de l'image considérée à un poste de codage vidéo pour un nouveau codage vidéo (370) du code postal par un autre opérateur différent de celui du premier codage vidéo de code postal (310) si la comparaison du ou des codes AKS avec le premier code postal obtenu par codage vidéo indique que ces codes ne coïncident pas,
- comparaison des deux codes postaux obtenus par codage vidéo (380), leur égalité permettant de qualifier d'incorrect le code postal qui se trouve sur l'envoi et leur inégalité permettant de mettre en oeuvre l'étape suivante :
- comparaison du ou des codes AKS avec la ou les rues ou la portion de rue (420, 430) déduite du code postal obtenu la deuxième fois par codage vidéo dans l'unité OCR, jusqu'à ce que les codes coïncident lors d'une comparaison de codes, et ainsi acceptation du code postal obtenu la deuxième fois par codage vidéo, et si les codes ne coïncident pas, classement du code postal qui se trouve sur l'envoi comme code postal incorrect.

2. Procédé selon la revendication 1, avec les étapes suivantes en présence d'un code postal classé comme incorrect .
- exécution de processus de lecture supplémentaires dans l'unité OCR (130) avec la partie du code postal qui a été réduite d'une position et qui caractérise la rue ou portion de rue et avec les codes AKS (390) et, en présence de résultats de lecture équivoques :
- exécution d'autres processus de lecture dans l'unité OCR (130) avec la partie du code postal encore réduite d'une autre position et caractérisant la rue ou portion de rue et avec les codes AKS (400), la réduction supplémentaire et les processus de lecture étant exécutés jusqu'à ce que le résultat de lecture soit univoque ou qu'il ne reste plus que quelques candidats parmi lesquels le candidat correct est sélectionné au moyen d'un codage à sélection.

3. Procédé selon la revendication 1 et la revendication 2, dans lequel, dans le cas d'une inégalité entre la rue lue par l'unité OCR (130) et la ou les rues ou la portion de rue déduite du code postal obtenu par codage vidéo, les étapes suivantes sont exécutées :
- transmission de l'image concernée à un poste de codage vidéo pour entrer un code d'extraction (330) caractérisant le point de distribution,
- comparaison dans l'unité OCR (130) pour savoir si la rue ou les rues ou la portion de rue déduite du premier code postal obtenu par codage vidéo coïncide (340) avec les données de code d'extraction, de sorte que, en cas de coïncidence, le code postal obtenu par codage vidéo est accepté et, en cas de non-coïncidence :
- transmission de l'image concernée à un poste de codage vidéo pour qu'un autre opérateur entre un nouveau code d'extraction (350) caractérisant le point de distribution,
- comparaison dans l'unité OCR (130) pour savoir si la rue ou les rues ou la portion de rue déduite du premier code postal obtenu par codage vidéo coïncide (360) avec les données de code d'extraction, de sorte que, en cas de coïncidence, le premier code postal obtenu par codage vidéo est accepté et, en cas de non-coïncidence :
- transmission de l'image considérée à un poste de codage vidéo pour un nouveau codage vidéo du code postal (370) par un autre opérateur différent de celui du premier codage vidéo de code postal (310) et comparaison des deux résultats de codage des codes postaux obtenus par codage vidéo, de sorte que, en cas d'égalité, les étapes suivantes sont exécutées :
- exécution de processus de lecture supplémentaires dans l'unité OCR (130) avec la partie du code postal obtenu par codage vidéo qui a été réduite d'une position et qui caractérise la rue ou portion de rue et avec les codes d'extraction (390) et, en présence de résultats de lecture équivoques, exécution d'autres processus de lecture dans l'unité OCR avec la partie du code postal encore réduite d'une autre position et caractérisant la rue ou portion de rue et avec les codes d'extraction (400), ces processus étant exécutés jusqu'à ce que le résultat de lecture soit univoque ou qu'il ne reste plus que quelques candidats parmi lesquels le candidat correct est sélectionné au moyen d'un codage à sélection, et, en cas d'inégalité des deux codes postaux obtenus par codage vidéo, les étapes suivantes sont exécutées :
- comparaison dans l'unité OCR pour savoir si la rue ou les rues ou la portion de rue déduite du premier code postal obtenu par codage vidéo coïncide (420) avec les données de code d'extraction, de sorte que, en cas de coïncidence, le code postal obtenu par codage vidéo est accepté et, en cas de non-coïncidence :
- comparaison dans l'unité OCR pour savoir si la rue ou les rues ou la portion de rue déduite du deuxième code postal obtenu par codage vidéo coïncide (430) avec les deuxièmes données de code d'extraction, de sorte que, en cas de coïncidence, le deuxième code postal obtenu par codage vidéo est accepté et, en cas de non-coïncidence :
- exécution de processus de lecture supplémentaires dans l'unité OCR (130) avec la partie du code postal obtenu par codage vidéo qui a été réduite d'une position, qui a été obtenue en premier par codage vidéo et qui caractérise la rue ou portion de rue et avec les codes d'extraction et, en présence de résultats de lecture équivoques, exécution d'autres processus de lecture avec la partie du code postal encore réduite d'une autre position, obtenue en premier par codage vidéo et caractérisant la rue ou portion de rue et avec les codes d'extraction, jusqu'à ce que le résultat de lecture soit univoque ou qu'il ne reste plus que quelques candidats parmi lesquels le candidat correct est sélectionné au moyen d'un codage à sélection et, si l'adresse n'est pas déterminable sans équivoque :
- exécution de ces processus de lecture supplémentaires dans l'unité OCR (130) avec le deuxième code postal obtenu ultérieurement par codage vidéo et avec les codes d'extraction jusqu'à la détermination d'adresse univoque (450).

4. Procédé selon la revendication 2 et la revendication 3, dans lequel la partie respective du code postal obtenue par codage vidéo et caractérisant la rue ou portion de rue est d'abord réduite de la position ayant la plus petite valeur puis, lorsque l'on n'obtient pas de résultat univoque lors de la nouvelle lecture dans l'unité OCR (130), elle est réduite encore de la position ayant la valeur suivante, et ainsi de suite.

5. Procédé selon la revendication 1, dans lequel le code postal concerne seulement la partie d'une grande rue et dans lequel on effectue en plus lors de la validation du code postal obtenu par codage vidéo une comparaison avec le résultat de lecture de l'unité OCR (130) pour savoir si le numéro d'habitation indiqué dans l'adresse lue ou partiellement lue se trouve à l'intérieur de la zone de numéros d'habitation déterminée à partir du code postal.

6. Procédé selon l'une des revendications 1 à 3, dans lequel on entre comme code AKS les deux premières lettres du nom de rue et le numéro d'habitation.

7. Dispositif de lecture d'adresses d'envois, lettres ou paquets, avec codes postaux, qui caractérisent les adresses jusqu'à la partie d'une grande rue ou quelques petites rues, avec un système de lecture d'adresse automatique qui comporte les éléments suivants :
- un dispositif pour l'obtention d'images d'envois (120),
- une unité OCR (130) pour l'évaluation automatique des images, comportant les informations d'adresses, des surfaces d'envois,
- des postes de codage vidéo (200) pour le codage vidéo des images, contenant les informations d'adresses, des surfaces d'envois,
- un contrôleur (170) pour la commande des opérations dans l'unité OCR (130) et dans les postes de codage vidéo ainsi que pour la commande de l'échange de données, lequel contrôleur est conçu de telle sorte que :
- après que des adresses n'ont pas pu être lues sans équivoque dans un premier essai de lecture (310) dans l'unité OCR (130), les images correspondantes des surfaces d'envois avec ces adresses sont d'abord transmises aux postes de codage vidéo (200) pour le codage vidéo des codes postaux, sachant que, dans le cas d'une inégalité entre la rue lue par l'unité OCR (130) et la ou les rues ou la portion de rue déduite du code postal obtenu par codage vidéo, les étapes suivantes sont exécutées :
- transmission de l'image concernée à un ou deux postes de codage vidéo pour entrer à chaque fois un code d'extraction (330, 350) caractérisant le point de distribution,
- comparaison du code d'extraction / AKS avec la ou les rues ou la portion de rue (340, 360) déduite du code postal dans l'unité OCR (130), acceptation du code postal si les codes coïncident lors d'une comparaison de codes, le deuxième codage AKS (350) s'effectuant seulement si aucun code postal accepté n'a été déterminé au moyen du premier codage AKS (330),
- transmission de l'image considérée à un poste de codage vidéo pour un nouveau codage vidéo (370) du code postal par un autre opérateur différent de celui du premier codage vidéo de code postal (310) si la comparaison du ou des codes AKS avec le premier code postal obtenu par codage vidéo indique que ces codes ne coïncident pas,
- comparaison des deux codes postaux obtenus par codage vidéo (380), leur égalité permettant de qualifier d'incorrect le code postal qui se trouve sur l'envoi et leur inégalité permettant de mettre en oeuvre l'étape suivante :
- comparaison du ou des codes AKS avec la ou les rues ou la portion de rue (420, 430) déduite du code postal obtenu la deuxième fois par codage vidéo dans l'unité OCR, jusqu'à ce que les codes coïncident lors d'une comparaison de codes, et ainsi acceptation du code postal obtenu la deuxième fois par codage vidéo, et si les codes ne coïncident pas, classement du code postal qui se trouve sur l'envoi comme code postal incorrect.

8. Dispositif selon la revendication 7, dans lequel le contrôleur (170) est conçu de telle sorte que les étapes suivantes sont exécutées en plus pour un code postal détecté comme incorrect :
- exécution de processus de lecture supplémentaires dans l'unité OCR (130) avec la partie du code postal qui est réduite d'une position et qui caractérise la rue ou portion de rue et à chaque fois avec les codes AKS et, en présence de résultats de lecture équivoques :
- exécution d'autres processus de lecture dans l'unité OCR (130) avec la partie du code postal encore réduite d'une autre position et caractérisant la rue ou portion de rue et avec les codes AKS, la réduction supplémentaire et les processus de lecture étant exécutés jusqu'à ce que le résultat de lecture soit univoque ou qu'il ne reste plus que quelques candidats parmi lesquels le candidat correct est sélectionné au moyen d'un codage à sélection.
